# EUROPÄISCHE PATENTANMELDUNG

(11) **EP 1 255 371 A1**
(43) Veröffentlichungstag der Anmeldung: **06.11.2002**
(21) Anmeldenummer: 02008541.1
(22) Anmeldetag: 16.04.2002
(51) Int. Cl.: H04L 7/02, H04L 7/033, H04L 25/49

(54) **Verfahren zur Datenübertragung durch Pulsweitenmodulation mit Träger und Synchronisation im Empfänger durch Verwendung unterschiedlicher Trägeramplituden, -phasen bzw. -frequenzen in benachbarten Symbolpositionen**

(30) Priorität: 04.05.2001 DE 10121855
(71) Anmelder: ATMEL Germany GmbH, 74072 Heilbronn (DE)
(72) Erfinder: Karthaus, Udo, 89079 Ulm (DE)
(74) Vertreter: Kolb, Georg

(57) **Zusammenfassung**

Verfahren zur effektiveren Übertragung von pulsweitenmodulierten Daten auf Trägern unter Verwendung unterschiedlicher Trägeramplituden, -phasen bzw. Frequenzen in benachbarten Symbolpositionen. Hierdurch kann der Anfang eines neuen Symbols bestimmt werden ohne, wie bei herkömmlicher Pulsweitenmodulation mit Return-to-zero (RZ) Kodierung eine nachfolgende Signalflanke zur Symbolsynchronisation abzuwarten. Somit kann die zur Verfügung stehende Bandbreite zur Datenübertragung effizienter ausgenutzt werden.

## Beschreibung

Die vorliegende Erfindung betrifft ein Verfahren zur Übertragung von Daten zwischen einer Basisstation und einem Transponder, gemäß dem Oberbegriff des Patentanspruchs 1.

Ein derartiges Verfahren ist aus der Druckschrift EP 473 569 B1 bekannt. Hierbei werden mittels einer amplitudenmodulierten Trägerwelle digitale Daten zwischen einer Basisstation und einem passiven Transponder ausgetauscht. Die einzelnen Bits eines Datenwortes bestehen aus einer Zeitspanne, in der das elektromagnetische Feld eingeschaltet und einer Zeitspanne, in der das elektromagnetische Feld (Feldlücke) ausgeschaltet ist, wobei die Feldlücke als Separator zwischen zwei aufeinanderfolgenden Bits dient. Die Wertigkeit der Bits bestimmt sich aus der Länge der Zeit, in der das elektromagnetische Feld eingeschaltet ist. Für die Gesamtzeit zur Darstellung der einzelnen Bits wird der feste zeitliche Beitrag der Feldlücke dazugezählt. Ferner wird bei dem passiven System aus dem Trägerfeld mittels Absorptionsmodulation die Energie und aus der Frequenz der elektromagnetischen Welle der Systemtakt für den Transponder erzeugt.

Ferner sind aus dem Datenbuch der Firma TEMIC Semiconductor GmbH, 1999, S. 321 und S. 337 weitere Verfahren beschrieben, mittels denen digitale Informationen in Form von Datenwörtern auf eine elektromagnetische Trägerwelle codiert werden. Im Fall der Phasen- und Frequenzmodulation wird mittels einer vorgegebenen Zuordnung von Spannungswerten die von der Wertigkeit der einzelnen Bits abhängt, die Trägerwelle moduliert. Damit wird der Spannungsverlauf des Modulationssignals aus der Folge der Wertigkeit der einzelnen Bits bestimmt.

Ein weiteres Verfahren ist in der Druckschrift DE 10050878 A dargestellt. Durch die Verwendung unterschiedlicher Modulationsindizes für die Amplitudenmodulation der Trägerwelle wird die Datenrate erhöht, indem mehrere Informationssymbole mit einer einzigen Trägerwelle übertragen werden. Hierzu wird die Trägerwelle mittels einer vorgegebenen Zuordnung zwischen den Informationssymbolen und den Modulationsindizes moduliert. Nachteilig ist, daß für die Separation der Informationssymbole eine empfindliche Demodulatorschaltung benötigt wird, welche bei ungünstigen Empfangsverhältnissen die Reichweite der Kommunikation einschränkt.

Im Allgemeinen werden Verfahren zur Übertragung von Daten im Bereich der Transponderdazu benutzt, innerhalb eines sogenannten Authentifizierungsprozesses eine Identifikation durchzuführen. Insbesondere bei Anwendungen im KFZ-Bereich muß der Authentifikationsprozeß zwischen Basisstation und Transponder innerhalb einer Zeitspanne von etwa 100 ms abgeschlossen sein, damit der Anwender keine Verzögerung bemerkt. Hierzu müssen in kurzen Zeitspannen eine Vielzahl von Datenwörtern mittels einer Trägerwelle übertragen werden. Neben der Phasen- und der Frequenzmodulation wird hierfür vor allem die Amplitudenmodulation eingesetzt. Um die immer höheren Sicherheitsanforderungen an den Authentifizierungsprozess umzusetzen, muß dabei die Datenrate weiter erhöht werden. Da Trägerfrequenzen im Bereich von UHF und Mikrowellen im allgemeinen auch eine höhere Bandbreite aufweisen, werden diese hohen Trägerfrequenzen zunehmend im Bereich der Transponder eingesetzt. Besonders für passive Transponder, die keine eigene Energieversorgung aufweisen, ist eine Takterzeugung mittels Frequenzteilung aus der sehr hochfrequenten Trägerwelle mit vertretbarem Aufwand nicht durchführbar. Ferner benötigt die Demodulation im Bereich der Mikrowellen und die Erzeugung eines Systemtaktes, beispielsweise mittels Oszillatorschaltung, viel Energie, die durch Absorptionsmodulation aus dem Trägerfeld gewonnen werden muß. Dadurch ist die Reichweite der Kommunikation zwischen der Basisstation und dem passiven Transponder auf wenige cm beschränkt.

Nachteil der bisherigen Verfahren ist, daß die Bandbreite der jeweiligen Trägerfrequenz bei der besonders häufig eingesetzten Amplitudenmodulation nur unzureichend genutzt wird, d.h. die tatsächliche Datenrate ist wesentlich kleiner als die maximal mögliche Datenrate. Dies macht sich bei zeitkritischen Anwendungen sehr störend bemerkbar. Ferner läßt sich mit den bisherigen Verfahren bei der Phasen- und Frequenzmodulation bei den passiven Transpondern nur eine sehr kleine Kommunikationsreichweite erreichen.

Aufgabe der vorliegenden Erfindung ist es, ein Verfahren zur Übertragung von Daten anzugeben, durch das sich die Datenrate bei der drahtlosen Kommunikation erhöht, und mit dem sich bei passiven Transpondern auf eine energetisch günstige Weise auch bei hohen Trägerfrequenzen ein Systemtakt erzeugen läßt.

Diese Aufgabe wird erfindungsgemäß durch ein Verfahren der eingangs genannten Art mit den Merkmalen des Patentanspruches 1 gelöst. Günstige Ausgestaltungsformen sind Gegenstand von Unteransprüchen.

Hiernach besteht das Wesen der Erfindung darin, bei einer kontaktlosen Kommunikation zwischen einer Basisstation und einem Transponder ein Modulationssignal, das aus einer Folge von wenigstens zwei unterschiedlichen Spannungswerten besteht, mit einem Datenwort, das aus einer Folge von einzelnen Bits besteht, zu verknüpfen, um damit eine elektromagnetische Trägerwelle zu modulieren. Hierzu wird fortlaufend jeder Bitposition innerhalb des Datenwortes ein Spannungswert von den unterschiedlich aufeinanderfolgenden Spannungswerten zugeordnet, wobei die Wertigkeit des einzelnen Datenbits die zeitliche Länge des jeweiligen Spannungswertes bestimmt. Im Unterschied zu den bisherigen Verfahren wechselt der Spannungswert des Modulationssignals jeweils zwischen benachbarten Bitpositionen. Insbesondere bei einer amplitudenmodulierten Trägerwelle wird die Datenrate wesentlich erhöht. Da mit jedem Bitwechsel eine Änderung in der Modulation der Trägerwelle verbunden ist, läßt sich aus der Demodulation der Trägerwelle ein Datenclock und daraus ein Systemtakt generieren.

In einer vorteilhaften Weiterbildung des Verfahrens wird die Trägerwelle mit einer vorgegebenen, sich wiederholenden Reihenfolge von unterschiedlichen Spannungswerten moduliert. Sofern ein großer Modulationshub erreicht werden soll, beispielsweise bei schwierigen Empfangsverhältnissen, ist es dabei von Vorteil, ein Modulationssignal zu verwenden, das aus einer Folge von zwei Spannungswerten besteht, die bei der Trägerwelle einen maximal zulässigen Modulationshub erzeugen und die zeitliche Länge der einzelnen Spannungswerte des Modulationssignals anzupassen.

Untersuchungen der Anmelderin haben gezeigt, daß sich mit einem Modulationssignal nach dem erfindungsgemäßen Verfahren bei einer Trägerwelle sowohl eine Amplitudenmodulation, als auch eine Phasenmodulation oder eine Frequenzmodulation durchführen läßt.

Der Vorteil gegenüber dem bisherigen Stand der Technik bei einer Amplitudenmodulation liegt darin, daß im Unterschied zu den bisherigen Verfahren, indem bei der Datenübertragung mittels einer Trägerwelle einem einzigen Bit eines Datenwortes im Modulationssignal mindestens zwei Spannungswerte zugeordnet sind und dem zweiten Spannungswert, der im Allgemeinen Null ist und als Separator zwischen zwei aufeinanderfolgenden Bits notwendig ist, ebenfalls ein eigenes Bit zugeordnet wird. Hierbei ist es unerheblich ob in der Bitfolge innerhalb des Datenwortes ein niederwertiges oder ein höherwertiges Bit folgt. Damit wird die Datenrate bei einer amplitudenmodulierten Trägerfrequenz wesentlich erhöht, da die Zeiten der Feldlücken und die bisher additiv zu den Feldzeiten je Bit dazugerechnet wurden, in zusätzlicher Weise zur Informationsübertragung genutzt werden. Ferner ist die zeitliche Länge der Feldlücke innerhalb den aus den benutzten Übertragungsstandards bzw. den technischen Möglichkeiten der Sende - und Empfangssystemen gegebenen Grenzen wählbar. Dies ist besonders bei zeitkritischen Anwendungen bei der Zugangskontrolle bei einem KFZ, mittels eines Authentifizierungsprozesses von erheblichem Vorteil. Ferner hängt die Erhöhung der Datenrate weder von der Anzahl der gewählten unterschiedlichen Spannungswerten des Modulationssignals, oder der gewählten Reihenfolge der Spannungswerte noch von der Frequenz der Trägerwelle ab und gilt auch für Trägerfrequenzen im Bereich von Mikrowellen.
Wird mit einem erfindungsgemäßen Modulationssignal eine Phasen- und Frequenzmodulation durchgeführt wechselt im Unterschied zu den bisherigen Verfahren die Phase oder die Frequenz der Trägerwelle mit jedem Bit unabhängig von dessen Wertigkeit. Vielmehr bestimmt die Wertigkeit ausschließlich die zeitliche Länge des jeweiligen Modulationszustands und lässt sich auch während der Datenübertragung ändern bzw. vereinbaren, beispielsweise mittels sogenannten "Header"-Informationen, wie sie zu Beginn einer Sequenz von Datenwörtern üblich sind.

In einer anderen Weiterbildung des Verfahrens wird dem niederwertigen Bit im Vergleich zu dem höherwertigen Bit eine kürzere zeitliche Länge zugeordnet. Dabei ist es besonders vorteilhaft wenn das niederwertige Bit die halbe Länge des höherwertigen Bits aufweist.

Ein weiterer Vorteil des erfindungsgemäßen Verfahrens ist es, daß durch den Wechsel der Spannungswerte im Modulationssignal mit jedem Bit, sich aus der Bestimmung des Betrages der Ableitung der modulierten Trägerwelle bei jedem Bitwechsel ein Impuls auftritt, aus denen sich ein Datenclock ableiten läßt. Des weiteren ist es möglich, aus dem Datenclock ein Systemtakt zu erzeugen, um einen umfangreichen Schaltungsteil zu ersetzen. Durch den geringeren Stromverbrauch wird die Reichweite des passiven Transponders für eine Kommunikation mit der Basisstation wesentlich erhöht.

Das erfindungsgemäße Verfahren soll nachfolgend anhand der Ausführungsbeispiele im Zusammenhang mit den Zeichnungen erläutert werden. Es zeigen, die
- Fig. 1: ein Modulationssignal mit einem bitweisen Wechsel von Spannungswerten, und
- Fig. 2a: eine durch das Modulationssignal von Fig. 2 erzeugte amplitudenmodulierte Trägerwelle, und
- Fig. 2b: ein Datenclocksignal, das aus der Trägerwelle von Fig. 2a abgeleitet wurde, und
- Fig. 3a: eine durch das Modulationssignal von Fig. 2 erzeugte frequenzmodulierte Trägerwelle, und
- Fig. 3b: ein Datenclocksignal, das aus der Trägerwelle von Fig. 3a abgeleitet wurde, und
- Fig. 4: ein Modulationssignal zur Pulsweitenmodulation nach dem bisherigen Stand der Technik.

In Figur 4 ist ein Modulationssignal nach dem bisherigen Stand der Technik dargestellt, mit dem bei einer elektromagnetischen Trägerwelle (nicht abgebildet) eine Pulsweitenmodulation durchgeführt wird, um beispielsweise digitale Daten für eine Identifikation zwischen einer Basisstation und einem Transponder zu übertragen. Hierfür ist in der Abbildung der Wert der Modulationsspannung über der Zeit aufgetragen. Im Folgenden wird die Struktur des Modulationssignals, das zwischen zwei Spannungswerten wechselt, erläutert. Das Modulationssignal zeigt eine Sequenz eines digitalen Datenwortes, das aus einer Abfolge von niederwertigen und höherwertigen Bits besteht. Die Spannungshöhe des Modulationssignals wechselt innerhalb eines Bits von dem Spannungswert Umod auf den Spannungswert Null, wobei dem höherwertigen Bit eine im Vergleich zu dem niederwertigen Bit wesentlich längere Zeitspanne, in der die Modulationsspannung den Wert Umod annimmt, zugeordnet ist. Anschließend folgt für beide Wertigkeiten der Bits eine weitere Zeitspanne, die unabhängig von der Wertigkeit des jeweiligen Bits ist, in der die Modulationsspannung den Wert Null annimmt. In den Zeiten, in der die Modulationsspannung den Wert Null aufweist, wird keine Trägerwelle ausgesendet. Solche Zeiten werden als Feldlücke bezeichnet und dienen zur Separation der einzelnen Bits eines Datenwortes.

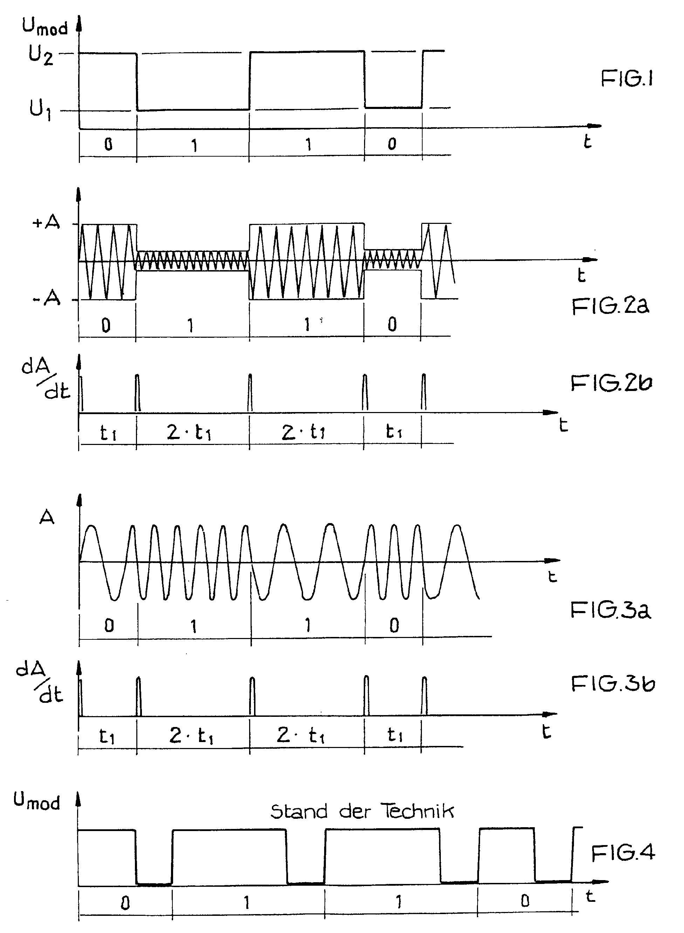

In Figur 1a ist ein Modulationssignal entsprechend dem erfindungsgemäßen Verfahren dargestellt. Wie in der Zeichnungsunterlage der Figur 4 wird der zeitliche Verlauf der Modulationsspannung dargestellt, wobei die gleiche Abfolge von niederwertigen und höherwertigen Bits gewählt wurde. Im Folgenden wird die Struktur des Modulationssignals erläutert, das zwischen zwei Spannungswerten U2 und U1 wechselt. Im Unterschied zu dem bisherigen Stand der Technik, ändert sich der Spannungswert des Modulationssignal nicht mehr innerhalb eines Bits sondern von Bit zu Bit. Das Wechseln des Spannungswertes dient zur Separation der Bits und ist unabhängig von der Reihenfolge und der Wertigkeit der Bits, wobei dem niederwertigen Bit im Vergleich zu dem höherwertigen Bit jeweils die Hälfte der Zeitspanne zugeordnet ist, in der das Modulationssignal den jeweiligen Spannungswert beibehält. Ein wesentlicher Vorteil des neuen Modulationsverfahren besteht darin, daß eine erheblich geringere Zeit benötigt wird, um eine gegebene Bitfolge zu übertragen. Sofern nicht durch eine Normung für die Kommunikation zwischen Basisstation und Transponder vorgegeben, ist die Zuordnung der Länge der Zeitspanne zu der Wertigkeit der Bits beliebig wählbar, wobei die Länge und der Unterschied zwischen den Zeitspannen zwischen dem höherwertigen und dem niederwertigen Bit an die Gegebenheiten des Gesamtsystems Basisstation und Transponder einstellbar sind. Die entsprechenden Einstellungen werden in einer Header"-Information, die den einzelnen Datensequenzen vorangestellt sind, mitübertragen.

In Figur 2a ist ausgehend von dem Modulationssignal der Figur 1 eine Amplitudenmodulation einer Trägerwelle dargestellt. Aufgetragen ist dabei die Höhe der Amplitude über der Zeit. Entsprechend der durch das Modulationssignal vorgegebenen Zuordnung sind die kurzen Zeitspannen, in der das Feld eingeschaltet ist oder eine Lücke aufweist, mit dem niederwertigen Bit (Null) verknüpft.
In Figur 2b zeigt den Betrag der Ableitung der Amplitude nach der Zeit, der in der Figur 2a abgebildeten Trägerwelle. Hiernach wird bei jeder Änderung der Amplitude ein deltaförmiges Signal erzeugt, wobei entsprechend der aus der Figur 1 gegebenen Zuordnung der Zeitraum t1 mit dem niederwertigen Bit, der Zeitraum 2T1 mit dem höherwertigen Bit korreliert ist. Da jedem neuen Bit, das empfangen wird, ein Signalimpuls vorausgeht, läßt sich auf einfache Weise ein Datenclock gewinnen und durch eine Messung der Zeitspanne zwischen zwei aufeinanderfolgenden Impulsen die Wertigkeit der Bits ermitteln. Die Messung der Zeitspanne kann beispielsweise durch Zählen von Taktimpulsen erfolgen, indem die Zahl der Taktimpulse mit einem vorgegebenen Wert verglichen wird. Durch die Ableitung eines Datenclocks aus der Trägerwelle ist es möglich, die Kommunikation zwischen dem Transponder auf einfache Weise mit einer Basisstation zu synchronisieren. Ferner ist es möglich, aus dem Datenclock einen Systemtakt abzuleiten. Insbesondere bei passiven Transpondern, die keine eigene Energieversorgung aufweisen, wird damit der Energieverbrauch bei Trägerfrequenzen im Mikrowellenbereich erheblich gesenkt und die Kommunikationsreichweite wesentlich vergrößert.

In Figur 3a ist ausgehend von dem Modulationssignal der Figur 1 eine Frequenzmodulation einer Trägerwelle dargestellt. Aufgetragen ist dabei die Höhe der Amplitude über der Zeit. Entsprechend der vorgegebenen Zuordnung ist das niederwertige Bit mit der kürzeren Zeitspanne verknüpft, wobei die Trägerwelle sowohl eine niedrigere als auch eine höhere Frequenz aufweist.

Figur 3b zeigt den Betrag der Ableitung der Frequenz nach der Zeit, der in der Figur 3a dargestellten Trägerwelle. Hiernach wird bei jeder Änderung der Frequenz ein deltaförmiges Signal erzeugt, wobei entsprechend der vorgegebenen Zuordnung der Zeitraum t1 mit dem niederwertigen Bit, der Zeitraum 2t1 mit dem höherwertigen Bit korreliert ist. Auch bei der frequenzmodulierten Trägerwelle läßt sich, da jedem Bit, das empfangen wird, ein Signalimpuls vorausgeht, auf einfache Weise ein Datenclock gewinnen und aus der Messung der Zeitspanne zwischen zwei aufeinanderfolgenden Impulsen die Wertigkeit der Bits ermitteln und aus dem Datenclock ein Systemtakt ableiten. Durch die Verringerung des Stromverbrauchs lassen sich auch frequenzmodulierte Trägerfrequenzen im Bereich der Mikrowellen für die Kommunikation zwischen einer Basisstation und einem passiven Transponder verwenden.

## Patentansprüche

1. Verfahren zur Übertragung von Daten zwischen einer Basisstation und einem Transponder mittels eines Modulationssignals, das aus wenigstens zwei unterschiedlichen Spannungswerten (U1, U2) besteht, zur Modulation einer elektromagnetischen Trägerwelle mit einem Datenwort, das aus einer Folge von Datenbits besteht,
**dadurch gekennzeichnet, daß**
jeder Bitposition des Datenwortes fortlaufend ein Spannungswert (U1, U2) des Modulationssignals mit unterschiedlichen Werten auf benachbarten Bitpositionen zugeordnet wird, und
die Wertigkeit des einzelnen Datenbits die zeitliche Länge des Spannungswertes (U1, U2) bestimmt.

2. Verfahren nach Anspruch 1, **dadurch gekennzeichnet, daß** die Modulation der Trägerwelle mit einer vorgegebenen, sich wiederholenden Reihenfolge von Spannungswerten (U1, U2) des Modulationssignals durchgeführt wird.

3. Verfahren nach einem der Ansprüche 1 oder 2, **dadurch gekennzeichnet, daß** die Modulation der Trägerwelle mit einem Modulationssignal, das zwei Spannungswerte (U1, U2) aufweist, durchgeführt wird.

4. Verfahren nach einem der Ansprüche 1 bis 3, **dadurch gekennzeichnet, daß** mittels des Modulationssignals eine Amplitudenmodulation (ASK) der Trägerwelle durchgeführt wird.

5. Verfahren nach einem der Ansprüche 1 bis 3, **dadurch gekennzeichnet, daß** mittels des Modulationssignals eine Phasenmodulation (PSK) der Trägerwelle durchgeführt wird.

6. Verfahren nach einem der Ansprüche 1 bis 3, **dadurch gekennzeichnet, daß** mittels des Modulationssignals eine Frequenzmodulation (FSK) der Trägerwelle durchgeführt wird.

7. Verfahren nach einem der Ansprüche 1 bis 6, **dadurch gekennzeichnet, daß** den niederwertigen Bits im Vergleich zu den höherwertigen Bits eine kürzere zeitliche Länge zugeordnet wird.

8. Verfahren nach Anspruch 7, **dadurch gekennzeichnet, daß** bei einem digitalen Datenwort dem niederwertigen Bit die halbe Länge (t1) des höherwertigen Bits zugeordnet wird.

9. Verfahren nach einem der Ansprüche 1 bis 8, **dadurch gekennzeichnet, daß** zur Bestimmung der zeitlichen Länge der Datenbits aus der modulierten Trägerwelle ein Datenclock abgeleitet wird.

10. Verfahren nach Anspruch 9, **dadurch gekennzeichnet, daß** aus dem Datenclock ein Systemtakt abgeleitet wird.
